# EUROPÄISCHE PATENTSCHRIFT

(11) **EP 4 228 872 B1**
(45) Veröffentlichungstag und Bekanntmachung des Hinweises auf die Patenterteilung: **24.07.2024**
(21) Anmeldenummer: 21794519.5
(22) Anmeldetag: 14.10.2021
(51) Int. Cl.: B27N 1/00, B27N 3/00, B27N 3/02, B27N 3/18, B27N 5/00, B65D 81/09, E04B 1/74

(54) **GESCHÄUMTE BIOGRANULATKÖRNER**
FOAMED BIOGRANULATE GRAINS
GRAINS BIOGRANULAIRES EXPANSÉS

(30) Priorität: 14.10.2020 EP 20201883
(43) Veröffentlichungstag der Anmeldung: 23.08.2023
(73) Patentinhaber: Bichsel, Hannes, 3400 Burgdorf (CH)
(72) Erfinder: Bichsel, Hannes, 3400 Burgdorf (CH)
(74) Vertreter: Keller Schneider Patent- und Markenanwälte AG
(86) Internationale Anmeldenummer: PCT/EP2021/078521
(87) Internationale Veröffentlichungsnummer: WO 2022/079202

(56) Entgegenhaltungen:
- EP-A2- 1 596 361
- WO-A1-92/04253
- WO-A1-95/25705
- DE-A1- 10 328 467
- DE-A1- 102004 024 249
- DE-A1- 102006 002 100
- GB-A- 2 366 853
- US-A- 3 511 899
- US-A- 4 849 233
- US-A1- 2022 410 440

## Beschreibung

### Technisches Gebiet

Die Erfindung betrifft eine Vorrichtung mit den Merkmalen des Anspruchs 1 bzw. 8 und ein Verfahren mit den Merkmalen des Anspruchs 11 bzw. 14. Die Unteransprüche zeigen jeweils bevorzugte Weiterbildungen der Erfindung. WO 9525705 A offenbart die Präambel des ersten Hauptanspruch.

### Stand der Technik

Es ist seit langem bekannt, geschäumte Biogranulatkörner als Werkstoff in verschiedenen Gebieten einzusetzen.

Unter geschäumten Biogranulatkörnern werden sämtliche schäumbaren Getreide verstanden. Ein typischer Vertreter von geschäumten Biogranulatkörner ist gepuffter Mais (ein Vertreter davon, welcher typischerweise nicht stofflich genutzt wird, ist das sogenannte Popcorn). Weiter kann auch Reis, Weizen, Roggen, Gerste, Hafer, Hirse, Quinoa, Dinkel etc. eingesetzt werden. Die geschäumten Biogranulatkörner werden mit einem hydrothermisch Expansionsverfahren hergestellt. Das Getreide, insbesondere der Mais kann dazu vorgängig zerkleinert worden sein. Damit wird insbesondere bei der Herstellung von Formkörpern eine bessere mechanische Verbindung unter den gepufften Körnern erreicht, da diese nicht rund sind.

So werden geschäumte Biogranulatkörner, insbesondere zum Beispiel gepuffter Mais, in loser Form als Verpackungsmaterial eingesetzt. Weiterhin ist es bekannt, gepufften Mais zu Formkörper zu verpressen und/oder zu verkleben, um formstabile Bauteile in unterschiedlichen Anwendungen zu erstellen.

Aus der EP 2 961 580 B1 (Univ. Göttingen Georg August) ist zum Beispiel bekannt, Popcorn in Holz- und/oder Verbundwerkstoffe, insbesondere der Spanplatten und Faserplatten, Dämmstoffplatten, Werkstoffplatten sowie Verbundwerkstoffe einzusetzen. Dazu werden Materialien aus zerkleinertem lignocellulosehaltigen Material oder Popcorn mit einem synthetischen oder naturnahen Bindemittel beleimt und unter Temperatur und Druck zu Verbundwerkstoffen verpresst.

Der Nachteil der bekannten Verfahren liegt darin, dass die geschäumten Biogranulatkörner nach der Beschichtung nur geringe Zeit haltbar sind. Die Herstellung des Halbfabrikats (geschäumte Biogranulatkörner mit Klebstoff beschichten) erfolgt daher typischerweise an Ort und Stelle, wo die Formkörper hergestellt werden. Damit wird eine dezentrale und damit kostengünstige Herstellung des Halbfabrikats verhindert.

### Darstellung der Erfindung

Aufgabe der Erfindung ist es, ein dem eingangs genannten technischen Gebiet zugehörendes Halbfabrikat zur Herstellung von Formkörpern zu schaffen, welches besonders effizient herstellbar ist und zudem bei gleichbleibender Qualität lager- und transportfähig und insbesondere rieselfähig bleibt.

Die Lösung der Aufgabe ist durch die Merkmale des Anspruchs 1 definiert.

Durch die Beschichtung, welche ein Pestizid umfasst, können die geschäumten Biogranulatkörner besonders lange haltbar gemacht werden. Je nach Anwendungsgebiet der Halbfabrikate (Gebäudeisolation, Verpackung, Geschirr, Automobilteile, Möbel etc.) können unterschiedliche Pestizide vorgesehen sein, zum Beispiel Fungizide, Herbizide, Bakterizide, Insektizide, Molluskizide, Ovizide, Rodentizide etc. Es ist weiter denkbar, Kombinationen der obigen Pestizide einzusetzen, so zum Beispiel Rodentizide zusammen mit Oviziden. In der Anwendung im Fassadenbau bei Gebäuden können zum Beispiel Rodentizide und Fungizide vorgesehen sein, während beim Einsatz in Möbeln Insektizide und Fungizide vorgesehen sind. Besonders bevorzugt ist das Pestizid biologisch abbaubar. In Varianten kann auf diese Eigenschaft verzichtet werden.

Unter geschäumte Biogranulatkörner werden zum Beispiel gepufftes (respektive geschäumtes) Getreide und Hülsenfrüchte verstanden, insbesondere gepufften Mais, Weizen, Reis, Erbsen etc. Das Puffing der Biogranulatkörner erfolgt dabei nach dem sogenannten Bichsel-Verfahren, welches in der Patentschrift EP 0 975 238 B1 detailliert beschrieben ist. Die Vorrichtung zum Puffen umfasst eine Heizvorrichtung zum Vorwärmen der Biogranulatkörner und einen Puffing-Reaktor zum Puffen der Biogranulatkörner. Die Heizvorrichtung weist ein anströmbodenloses Strahlwirbelbett auf, in dem ein Batch des zu erwärmenden Gutes in einem zum Puffing-Prozess getaktet und batchweise ablaufenden Vorwärmvorgang mit einem wärmeführenden, gasförmigen Medium beaufschlagbar ist. Vorzugsweise handelt es sich dabei um ein hydrothermisches Puffen. Mit diesem Verfahren werden gepuffte Biogranulatkörner erreicht, welche besonders federnde Eigenschaften aufweisen. Diese Eigenschaften sind von besonderem Vorteil in der Verwendung der geschäumten Biogranulatkörner in der Herstellung von Formkörpern. Solche Formkörper behalten die federnden Eigenschaften der Biogranulatkörner vorzugsweise bei, womit solche Formkörper besonders federnd, haltbar und stabil sind.

Grundsätzlich können gepuffte Partikel auch mit Heissluft oder durch Extrusion gewonnen werden. Diese haben aber den Nachteil, dass sie aufgrund des geringen Wasseranteils in ihrer Textur spröde (verglaste Stärke) sind. Formkörper mit komplexen Formen und mechanischen Ansprüchen können damit nicht hergestellt werden.

Die Textur der erfindungsgemäss zu verwendenden Biogranulatkörner ist somit vorzugsweise weich, schwammartig und federnd. Bei Kompression um den Faktor 1.5 federn die Partikel vorzugsweise maximal innert Minutenfrist auf ihre ursprüngliche Dimension zurück. Hydrothermisch gepuffte Biogranulatkörner lassen sich auf die Hälfte bis einen Drittel ihrer Abmessungen zusammendrücken. Bei Entfernen der Kompressionskraft federn die Partikel nahezu auf ihre ursprüngliche Grösse zurück. Dieser Effekt kann über die Feuchtigkeit der hydrothermisch gepufften Partikel gesteuert werden. Die natürliche Feuchtigkeit von 4-996 ist bei den meisten Getreiden ausreichend zur Erlangung der federnden Eigenschaft. Bei Feuchtigkeitsmangel wird die aufgeschlossene Stärke spröde, der Federeffekt geht verloren.

Der Klebstoff kann grundsätzlich beliebig sein, insbesondere können Mischungen von mehreren Klebstoffen oder auch nur ein einziger Klebstoff vorgesehen sein. Vorzugsweise handelt es sich beim Klebstoff um einen biologisch abbaubaren Klebstoff. In Varianten kann auf diese Eigenschaft verzichtet werden.

Der Klebstoff ist derart beschaffen, dass die damit beschichteten geschäumten Biogranulatkörner rieselfähig sind. Damit kann das Halbfabrikat besonders effizient in eine Pressform eingetragen werden, womit wiederum besonders homogene Formkörper hergestellt werden können. Der Klebstoff kann dazu zum Beispiel ein thermoplastisches Polymer umfassen. Der Klebstoff kann aber als reaktiver Klebstoff vorliegen. Dem Fachmann sind weitere Varianten bekannt.

Der Klebstoff wird vorzugsweise als Schmelze auf den geschäumten Biogranulatkörner aufgetragen. In Varianten kann auch eine Lösung eingesetzt werden, wobei das Lösemittel nach dem Auftragen verdampft oder anderweitig entfernt wird.

Vorzugsweise sind der Klebstoff und das Pestizid biologisch abbaubar, so dass das Halbfabrikat als Ganzes biologisch abbaubar respektive umweltverträglich ist. Weiter bevorzugt sind der Klebstoff und das Pestizid biobasiert, d. h. aus erneuerbaren Ressourcen respektive nachwachsenden Rohstoffen gebildet. In Varianten können der Klebstoff und/oder das Pestizid auch nicht biologisch abbaubar und/oder nicht biobasiert sein.

Vorzugsweise umfasst der Klebstoff Polylactide (abgekürzt PLA) und/oder Polybutylenadipat-terephthalat (abgekürzt PBAT), vorzugsweise eine Mischung aus Polylactiden und Polybutylenadipat-terephthalat, bei welcher ein Anteil der Polylactide 0 96 oder mehr als 1 gew. 96, vorzugsweise mehr als 10 gew. 96, insbesondere bevorzugt mehr als 30 gew. 96 im Klebstoff beträgt. Damit wird ein biologisch abbaubarer Klebstoff erhalten, welcher einerseits die Herstellung eines rieselfähigen Halbfabrikats ermöglicht und zudem kostengünstig und einfach in der Anwendung ist.

Weitere mögliche Klebstoffe können, gegebenenfalls zusätzlich zu einer oder mehreren der obigen Klebstoffe, eine oder mehrere der folgenden Komponenten umfassen: Polyamide, Polyester und Polycarbonate, Polyether; Phenol- und Amin-Formaldehyde (wie z. B. Poly(phenolformaldehyd)-Harze, Poly(melaminformaldehyd)-Harze, Poly(harnstoffformaldehyd)-Harze und dergleichen); Polyimide; Polyimine; Polysaccharide (wie Cellulosen, Carboxymethylcellulosen, Celluloseacetate, Cellulosenitrate und dergleichen), Polysulfone, Polyalkine. Dem Fachmann sind weitere Vertreter der Klebstoffe bekannt.

Vorzugsweise umfasst das Pestizid Siliziumdioxid, insbesondere Silikagel, besonders bevorzugt gemahlenes Silikagel, I<ieselalgen (Diatomeen), Glaspulver, Glassplitter und/oder eine Borverbindung, vorzugsweise Borsäure. Experimente mit I<ieselalgen haben gezeigt, dass damit, bereits mit bereits relativ geringen Zugabemengen, besonders gute Ergebnisse in der Haltbarkeit erreicht werden können. Die I<ieselalgen können aus natürlichen Vorkommen abgebaut sein oder speziell für die Anwendung gezüchtet werden. Weiter bevorzugt umfasst das Pestizid ätherische Öle. Die Ätherischen Öle können zum Beispiel Lavendelöl, Rosmarinöl, Zitronell, Melisse, Zeder, Pfefferminze, Eukalyptus oder Sandelholzextrakt umfassen. Vorzugsweise werden die ätherischen Öle dem Klebstoff zugegeben. In Varianten oder zusätzlich können das Halbfabrikat respektive die Formkörper auch nach deren Herstellung mit ätherischen Ölen versetzt werden.

Bei I<ieselgel und Borsäure handelt es sich um Trockenmittel, die bei Schädlingsbekämpfern als sicher gelten. Beide Stoffe entziehen den Schädlingen Wasser, womit diese austrocknen. Wird I<ieselgel oder Borsäure von Nagetieren gefressen, so trocknen sie von innen aus. Eier von Schädlingen respektive die Schädlinge selbst trocknen ebenfalls aus oder werden an der Entwicklung gestört. Damit kann das Halbfabrikat von einer Vielzahl an Schädlingen geschützt werden.

Weiter hat der Einsatz von I<ieselgel den Vorteil, dass damit das Beschichtungsverfahren optimiert werden kann, da I<ieselgel als Bestandteil des Klebstoffes als Fliessverbesserer fungieren kann.

Der Einsatz von I<ieselgel respektive Borsäure hat den Vorteil, dass dies für den Menschen weitgehend ungefährlich ist und zudem biologisch abbaubar respektive für die Natur unschädlich ist. Dem Fachmann sind allerdings auch weitere Pestizide bekannt, welche in den Halbfabrikaten eingesetzt werden können.

Vorzugsweise umfasst die Beschichtung mindestens eine erste, innere Schicht und eine zweite, äussere Schicht, wobei das Pestizid in der ersten, inneren Schicht ist. Silikagel (und auch weitere Pestizide) sind hygroskopisch. Durch die Aufnahme von Wasser kann das Silikagel seine Wirkung als Pestizid verlieren. Dadurch, dass über der das Pestizid umfassenden Schicht eine weitere Schicht als Klebschicht und Versiegelung vorgesehen ist, kann das Pestizid gegen die Aufnahme von Feuchtigkeit aus der Umgebung geschützt werden.

In Varianten kann auch genau eine Schicht vorgesehen sein, welche das Pestizid umfasst.

Prinzipiell kann der Aufbau mehrerer Schichten auch dann von Vorteil sein, wenn kein Pestizid vorgesehen ist. So kann damit zum Beispiel eine dickere Klebstoffschicht erreicht werden, welche besonders gleichmässig aufgetragen ist. Weiter können einer oder mehreren Schichten auch Farbstoffe (siehe unten), Duftstoffe und weitere Stoffe beigemengt werden.

Bevorzugt umfasst die erste innere Schicht eine Mischung aus Pestizid und Klebstoff. Auch wenn genau eine Schicht vorgesehen ist, kann diese einzige Schicht eine Mischung aus Pestizid und Klebstoff umfassen. Mit dieser Technik kann das Pestizid besonders gleichmässig auf die geschäumten Biogranulatkörner aufgetragen werden. Dem Fachmann ist klar, dass auch weitere Schichten, insbesondere auch eine äusserste Schicht ein Pestizid umfassen kann. Es ist auch denkbar, die äusserste Schicht zum Beispiel mit einem Fungizid zu versetzen, während in einer inneren Schicht ein Rodentizid gegebenenfalls zusammen mit einem Fungizid vorgesehen ist (der Fachmann erkennt sofort, dass auch andere Schichtaufbauten möglich sind). Damit kann mit den Schichten die Art des Schädlings berücksichtigt werden.

In einem Verfahren zur Herstellung eines Halbfabrikats werden die geschäumten Biogranulatkörner mit einem Klebstoff und einem Pestizid beschichtet.

Die Beschichtung wird vorzugsweise in mindestens einer ersten Coatiertrommel aufgetragen. Beim sogenannten Trommel-Coating in der Coatiertrommel wird das zu beschichtende Gut in die Trommel gegeben und dort, bei rotierender Trommel, mit dem Beschichtungsmaterial versetzt, typischerweise besprüht. Dem Fachmann sind unterschiedliche Typen von Coatiertrommeln und unterschiedliche Betriebsarten der Coatiertrommeln bekannt, wobei grundsätzlich sämtliche Typen von Coatiertrommeln und Betriebsarten für die vorliegende Beschichtung eingesetzt werden können. Grundsätzlich werden vorzugsweise die folgenden Schritte durchgeführt:
a. Eintragen der geschäumten Biogranulatkörner in die erste Coatiertrommel;
b. Rotieren der Coatiertrommel;
c. Eintragen des Klebstoffes und des Pestizides.

In einer Vielzahl an Versuchen hat sich gezeigt, dass der Einsatz der Coatiertrommel, insbesondere ein zylindrischere Coatiertrommel zum Beschichten von geschäumten Biogranulatkörner besonders vorteilhaft ist. Dem Fachmann ist aber klar, dass auch andere Beschichtungstechniken eingesetzt werden können, so zum Beispiel ein Sprühtrockner respektive das Wirbelschicht-Coatingverfahren oder dergleichen.

Bevorzugt umfasst die erste Coatiertrommel mindestens eine erste Lanze zum Auftragen der Beschichtung. Die Lanze ist vorzugsweise während des Beschichtungsverfahrens ausserhalb der Biogranulatkörner angeordnet. Die Lanze ist damit bevorzugt ortsfest, in einer oberen Hälfte der Coatiertrommel angeordnet, das heisst, sie dreht nicht mit der rotierenden Coatiertrommel mit.

In Varianten kann die Coatiertrommel auch Austrittsdüsen oder -Öffnungen für das Beschichtungsmaterial umfassen, welche fest mit der Trommel verbunden sind.

Vorzugsweise umfasst die erste Coatiertrommel eine zweite Lanze, wobei vorzugsweise mit der ersten Lanze der Klebstoff und mit der zweiten Lanze das Pestizid in die Coatiertrommel eingetragen wird. Damit kann das gesamte Verfahren in einer einzigen Coatiertrommel durchgeführt werden. In Varianten kann aber auch eine Kaskade an Coatiertrommeln vorgesehen sein, so dass in der ersten Coatiertrommel zum Beispiel die erste Schicht mit dem Pestizid und in der zweiten Coatiertrommel die zweite Schicht, ohne Pestizid aufgetragen wird. Dies hat den Vorteil, dass das teilbeschichtete geschäumte Biogranulatkörner vor der weiteren Beschichtung auskühlen kann. Weiter kann auch dieselbe Lanze sequentiell für unterschiedliche Produkte vorgesehen sein. Damit besteht jedoch die Gefahr, dass die zweite Schicht durch das Material der ersten Schicht kontaminiert wird.

In einer weiteren Variante wird mit der Coatiertrommel, welche zwei Lanzen umfasst, in einem ersten Schritt Klebstoff über die erste Lanze aufgetragen, als zweite Schicht das Pestizid (z.B. als Pulver) über die zweite Lanze aufgetragen und als dritte Schicht wiederum den Klebstoff über die erste Lanze aufgetragen. Grundsätzlich können auch mehr als drei Schichten vorgesehen sein.

Vorzugsweise umfasst die erste Lanze mehrere Öffnungen, wobei der Klebstoff als Flüssigkeitsstrahl aus den mehreren Öffnungen austritt. Die Öffnungen respektive Düsen können Kreisrund oder auch länglich, als Schlitze ausgebildet sein. Die Anzahl der Öffnungen kann zwischen 1 und 50, vorzugsweise zwischen 3 und 15 liegen. Mit den mehreren Öffnungen kann ein gleichmässiger Auftrag auf die geschäumten Biogranulatkörner erreicht werden. Es hat sich gezeigt, dass der Eintrag des Klebstoffes, insbesondere im Fall eines durch Erhitzen verflüssigten Polymers, der Auftrag als Flüssigkeitsstrahl von besonderem Vorteil ist, da damit der Klebstoff nicht zu schnell auskühlen kann. Beim Sprühen mit Druckluft besteht die Gefahr, dass sich der Klebstoff ausserhalb der Oberfläche der geschäumten Biogranulatkörner vernetzt, so dass die geschäumten Biogranulatkörner nicht beschichtet werden. Unter Umständen ist das Sprühverfahren mit Druckluft jedoch trotzdem erfolgreich, wenn die Temperatur des Gesamtsystems und der Innenluft hinreichend hoch gehalten wird - hierbei ist jedoch Vorsicht geboten, so dass die geschäumten Biogranulatkörner durch die Hitze nicht verfärbt oder verbrannt werden.

Dem Fachmann ist allerdings klar, dass der Klebstoff (ob zusammen mit dem Pestizid oder nicht spielt keine Rolle) auch auf andere Weise als Flüssigkeit auf die geschäumten Biogranulatkörner aufgetragen werden können, zum Beispiel durch ortsfest an der Trommelwand positionierte Düsen. Prinzipiell könnten die geschäumten Biogranulatkörner aber auch in den flüssigen Klebstoff getaucht werden, um diese zu beschichten.

Bevorzugt wird mit der zweiten Lanze eine Mischung aus dem Klebstoff und dem Pestizid ausgetragen. Prinzipiell können die beiden Lanzen auch für andere Mehrschichtaufbauten eingesetzt werden.

Vorzugsweise werden gemäss obigem Verfahren innerhalb des Schrittes c. nacheinander die folgenden Schritte ausgeführt:
c1. Auftragen des Pestizids auf die geschäumten Biogranulatkörner;
c2. Auftragen des Klebstoffs auf die geschäumten Biogranulatkörner.

Vorzugsweise wird das Pestizid vorgängig mit dem Klebstoff vermengt, so dass das Pestizid besonders einfach auf die geschäumten Biogranulatkörner aufgetragen werden kann. Der Klebstoff, in welchem das Pestizid aufgetragen wird, kann sich von dem Klebstoff unter Schritt c2 unterscheiden. Damit kann für das Auftragen des Pestizids ein erster Klebstoff eingesetzt werden und für die äussere Schicht, welche zum Verbinden der einzelnen geschäumten Biogranulatkörner untereinander dient, ein zweiter Klebstoff eingesetzt werden. Der erste und der zweite Klebstoff müssen sich nicht grundlegend unterschieden, gegebenenfalls können sich diese lediglich in der Viskosität unterscheiden (z. B. unterschiedliches Verhältnis zwischen PLA und PBAT). Anderseits können auch unterschiedliche Klebstoffe, welche sich in mindestens einer Komponente unterscheiden, in den unterschiedlichen Schichten eingesetzt werden.

Das Pestizid und der Klebstoff werden vorzugsweise in einem Extruder vermengt. In diesem Fall kann direkt mit dem Extruder das Pestizid zusammen mit dem Klebstoff den geschäumten Biogranulatkörnern zudosiert werden, insbesondere in einer Coatiertrommel. In Varianten kann mit dem Pestizid und dem Klebstoff auch ein Zwischenprodukt hergestellt werden, welches erhitzt und als Flüssigkeit über Düsen in die Coatiertrommel eingetragen wird. Dem Fachmann sind weitere Varianten bekannt.

Vorzugsweise wird nach dem Auftragen des Klebstoffes (mit oder ohne Zusatzstoffe) das Halbfabrikat respektive die beschichteten, geschäumten Biogranulatkörner, abgekühlt, so dass sich die Beschichtung respektive die einzelne Schicht aushärten können. Besonders bevorzugt findet der I<ühlvorgang innerhalb der Coatiertrommel statt, bei rotierender Coatiertrommel. Damit wird die Schicht respektive Beschichtung verfestigt, womit ein Verkleben der geschäumten Biogranulatkörner untereinander verhindert werden kann. Der I<ühlvorgang kann nach jedem Auftrag einer Schicht (innere Schicht, äussere Schicht und gegebenenfalls weitere Schichten) erfolgen. Auf den I<ühlvorgang kann auch verzichtet werden.

Der I<ühlvorgang wird vorzugsweise durch Einblasen eines Gases oder Gasgemischs erreicht. Besonders bevorzugt wird trockenes Gas respektive Gasgemisch eingesetzt, um ein Verkleben und gegebenenfalls eine Wasseraufnahme durch das Pestizid (z. B. im Fall von Silikagel oder Borsäure) zu verhindern respektive zu vermindern. Weiter bevorzugt handelt es sich beim Gas um Stickstoff, da Stickstoff gut und günstig verfügbar ist und kaum Feuchtigkeit aufweist. Weiter kann auch Luft, getrocknete Luft, CO₂ etc. eingesetzt werden. Das Einblasen kann über die Lanzen erfolgen. Weiter kann das Einblasen über separate, mit der Trommel fest verbundene Düsen oder I<oaxiale zur Coatiertrommel, z.B. Gegenstrom, erfolgen.

Statt durch Einblasen von Gas respektive Gasgemisch kann das Halbfabrikat respektive die eine oder mehrere Schichten aufweisenden geschäumten Biogranulatkörner auch durch einen Umschüttvorgang abgekühlt werden. Dies kann zum Beispiel bei einer Kaskade von Coatiertrommeln bei einer Übertragung zwischen den Coatiertrommeln geschehen, indem die eine oder mehrere Schichten aufweisenden geschäumten Biogranulatkörner mittels der Schwerkraft von dem Austrag der einen Coatiertrommel in den Eintrag der nächsten Coatiertrommel geschüttet werden. Dem Fachmann sind weitere Möglichkeiten bekannt, wie der I<ühlvorgang umgesetzt werden kann.

Vorzugsweise wird das Halbfabrikat zur Herstellung eines Formkörpers verwendet. Unter Formkörper wird hierbei ein in sich stabiles Gebilde verstanden, im Unterschied zu einem losen Schüttgut. Das Halbfabrikat kann aber auch als rieselfähiges Schüttgut eingesetzt werden, ohne dass ein Formkörper gebildet wird, zum Beispiel als Verpackungs- oder Isolationsmaterial. Weiter kann der Formkörper auch erst in der Anwendung als Isolations- oder Verpackungsmaterial gebildet werden. Das Halbfabrikat kann zum Beispiel in eine Kavität einer Mauer eingefüllt werden und anschliessend durch Erhitzen zu einem Formkörper verbunden werden. Damit muss das Isolationsmaterial nicht plattenförmig vorliegen, womit keine Anpassung vorgenommen und somit auch Abschnitte vermieden werden können. Damit kann besonders effizient und kostengünstig isoliert werden. Das Halbfabrikat kann auch als Verpackungsmaterial z. B. in einen Transportbehälter gefüllt werden, welcher einen gegebenenfalls unförmigen Gegenstand enthält, wobei anschliessend das Halbfabrikat durch Hitzeeinwirkung oder anderweitige Aktivierung zu einem Formkörper gebunden wird. Dem Fachmann sind weitere Anwendungen bekannt.

Vorzugsweise umfasst ein Isolationselement für die Gebäudeisolation einen solchen Formkörper. Insbesondere der Einsatz des Halbfabrikats, umfassend ein Pestizid ermöglicht die Verwendung der Formkörper als Isolationselement, ohne die Gefahr, dass das Isolationselement Opfer von Schädlingen wird. Damit können geschäumte Biogranulatkörner auch langfristig im Bau eingesetzt werden. Bei einer Renovation oder einem Abbruch eines solchen Gebäudes können die Isolationselement respektive die Formkörper einfach separiert und im Biomüll entsorgt werden, da vorzugsweise sämtliche Bestandteile der Formkörper, d. h. die geschäumten Biogranulatkörner, der Klebstoff und das Pestizid biologisch abbaubar sind.

Vorzugsweise umfasst das Isolationselement mindestens eine erste Lage und eine zweite Lage, wobei die geschäumten Biogranulatkörner in der ersten Lage eine geringere mittlere Korngrösse (z. B. nach DIN 18123) aufweisen als die geschäumten Biogranulatkörner der zweiten Lage. Damit kann ein Isolationselement mit einem besonders optimalen Schallschutz erreicht werden. Der Aufbau kann in einem einzigen Herstellungsschritt erreicht werden, indem das Halbfabrikat mit unterschiedlichen I<orngrössenverteilungen schichtweise in eine Pressform eingetragen wird und am Schluss unter Hitzeeinwirkung zum Isolationselement verbunden respektive verpresst wird. In Varianten können auch einzelne Isolationselemente mit unterschiedlichen I<orngrössenverteilungen zu einem solchen Schallisolationselement zusammengesetzt werden. Das Isolationselement kann dabei mehr als zwei Lagen mit unterschiedlichen I<orngrössenverteilungen aufweisen.

Bevorzugt wird das Halbfabrikat in eine Pressform eingetragen und anschliessend unter Hitzeeinwirkung zu einem Formkörper verbunden respektive verpresst. In Varianten kann auf das Verpressen auch verzichtet werden. Abhängig vom verwendeten Klebstoff können statt der Hitzeeinwirkung auch andere Techniken zur Aktivierung des Klebstoffes vorgesehen sein.

Vorzugsweise wird die Hitzeeinwirkung durch Bestrahlung, insbesondere mit einer Radiowellen-Bestrahlung erreicht. In Varianten kann die Hitzeeinwirkung auch mit Mikrowellen, durch Erhitzen der Pressform etc. erreicht werden.

Nachfolgend wird zwischen den Begriffen Formkörper und Formteile nicht unterschieden und damit dasselbe bezeichnet.

Der Einsatz von Mikrowellen hat den Vorteil, dass ein besonders homogenes Erhitzen möglich ist, womit ein schonendes Verbacken der Formteile (Formkörper) möglich wird. Bei herkömmlichen Verfahren, bei welchen die Pressform selbst erhitzt wird, besteht der Nachteil, dass ein Randbereich des Formkörpers übermässig erhitzt wird, womit insbesondere voluminöse Formkörper schwierig zu verbacken sind. Dieser Nachteil ist insbesondere beim Verbacken von Halbfabrikaten aus geschäumten Biogranulatkörner relevant, da die Biogranulatkörner eine hohe Wärmekapazität und eine geringe Wärmeleitfähigkeit aufweisen. Diese können bei zu hoher Hitze verbrennen. Durch den Einsatz von elektromagnetischen Wellen zum Verbacken des Halbfabrikats kann weiter der Feuchtigkeitsgehalt und der Druck im Formkörper besonders einfach gesteuert werden. Weiter können damit Formteile mit besonders grossen Dicken (kleinster Durchmesser des Formteils), insbesondere mit mehr als 3 cm, vorzugsweise mehr als 5 cm, insbesondere bevorzugt mehr als 8 cm erreicht werden. Weiter können auch weit grössere Formteile erreicht werden, zum Beispiel mit einem kleinsten Durchmesser von mehr 20 cm oder mehr als 100 cm. Zusätzlich zu den elektromagnetischen Wellen kann der Formraum mit dem Halbfabrikat zum Beispiel mit Heissdampf beaufschlagt werden. Weiter kann zusätzlich der Formraum mit Heizelementen aufgeheizt werden. In diesem Fall kann mit den elektromagnetischen Wellen die Beheizung mit Heizelementen und/oder mit Heissdampf lediglich unterstützt werden.

Dem Fachmann ist klar, dass das Halbfabrikat nicht zwingen ein Pestizid umfassen muss. Je nach Art der Lagerung der Halbfabrikate kann auf das Pestizid verzichtet werden. Insbesondere wenn die aus dem Halbfabrikat hergestellten Formkörper zum Beispiel mit einem Mantel umschlossen werden, kann ebenfalls auf ein Pestizid verzichtet werden.

In einem Verfahren zur Herstellung eines Formkörpers werden, eine Klebstoffbeschichtung aufweisende, geschäumte Biogranulatkörner, insbesondere geschäumtes Popcorn mit einer Klebstoffbeschichtung, einem Formraum eines Formwerkzeugs zugeführt und die, eine Klebstoffbeschichtung aufweisenden, geschäumten Biogranulatkörner werden im Formraum mittels elektromagnetischer Wellen untereinander verbunden.

Vorzugsweise weist der Anteil der eine Klebstoffbeschichtung aufweisenden, geschäumten Biogranulatkörner mindestens 2096, vorzugsweise mindestens 5096, insbesondere 10096 umfasst. In Varianten kann der Anteil auch geringer als 2096 sein. Die Biogranulatkörner können unterschiedliche Zusammensetzungen aufweisen, insbesondere können Mischungen aus gepufftem Mais und gepufftem Reis oder dergleichen vorliegen. Weiter können Zuschlagstoffe wie zum Beispiel rezyklierte Materialien zugefügt werden, insbesondere zum Beispiel expandierte Kunststoffe wie zum Beispiel thermoplastisches Polystyrol, Polypropylen oder Partikelschaumstoffteile aus anderen Polymeren.

In einer weiteren Variante kann auf die Klebstoffbeschichtung der Biogranulatkörner verzichtet werden. In diesem Fall können zum Beispiel I<unststoffkügelchen den Biogranulatkörner beigemischt werden und in den Formraum gegeben werden. Durch das Aufheizen der I<unststoffkügelchen werden diese angeschmolzen und verbinden benachbarte Biogranulatkörner zu Cluster. Ein solcher Kunststoff könnte zum Beispiel PHBH (Polyhydroxybuttersäure und deren Derivate) sein. Weiter können auch die Stärke der Biogranulatkörner selbst mit Wasser oder Dampf angelöst werden, womit die Biogranulatkörner verbunden werden können.

Vorzugsweise ist der Formraum mit einem Druck von zumindest 2 bar (0.2 MPa), insbesondere zumindest 3 bar (0.3 MPa) und vorzugsweise zumindest 5 bar (0.5 MPa) beaufschlagt. In Varianten kann der Druck auch geringer als 2 (0.2 MPa) sein.

Die Biogranulatkörner werden mit einem Feuchtigkeitsanteil von 4-9 gew.96, insbesondere mit einem Feuchtigkeitsanteil von rund 7 gew.96 eingesetzt. Versuche haben gezeigt, dass damit besonders stabile Formkörper erreicht werden können. Um diesen Feuchtigkeitsanteil halten zu können, wird vorzugsweise im Verfahren der Formraum unter Druck gesetzt. Damit wird verhindert, dass die Feuchtigkeit während des Erhitzens mit den elektromagnetischen Strahlen entweicht. Vorzugsweise liegt der Druck dabei bei 1.5 bis 2.5 ba^{r} (0.15 MPa bis 0.25 MPa), vorzugsweise bei rund 2 bar (0.2 MPa). Die Temperatur wird vorzugsweise zwischen 100 °C und 140 °C, weiter bevorzugt bei rund 120 °C gehalten. Der Druck kann auch höher als 2 bar (0.2 MPa) sein. Eine obere Grenze des Drucks und der Temperatur liegt bei rund 6 bar (0.6 MPa) und 16C °C, da in diesem Bereich die Biogranulatkörner oxidieren (verbrennen). Mit einer Zugabe eines Brandverzögerers oder unter Schutzgas kann der Temperatur und Druckbereich jedoch gegebenenfalls erhöht werden. Dem Fachmann ist eine Vielzahl solcher Flammschutzmittel und Schutzgase bekannt.

Weiter bevorzugt liegt der Überdruck im Bereich von 0.1 bar bis 10 bar (0.01 MPa bis 1 MPa), vorzugsweise unterhalb 6 bar (0.6 MPa), besonders bevorzugt zwischen 5 und 7 bar (0.5 und 0.7 MPa). In Varianten kann das Formteil auch bei einem Unterdruck, insbesondere bei einem Unterdruck zwischen 0.1 bar und 0.3 bar (0.01 und 0.03 MPa) verarbeitet werden.

Vorzugsweise umfasst der Klebstoff ein organisches Polymer, ein organisches Copolymer oder Mischungen davon, wobei der Klebstoff insbesondere biologisch abbaubar und/oder biobasiert ist. In Varianten können andere dem Fachmann bekannte Klebstoffe eingesetzt werden.

Als Klebstoff können insbesondere Thermoplasten, Duroplasten, Aminoplasten, Phenoplasten, Isocyanate, Proteine, Tannine, Stärke, synthetische Bindemittel oder naturnahe Bindemittel, oder Mischungen von Bindemitteln eingesetzt werden. Weiter können alternativ oder zusätzlich Polypropylen, Polyethylen, Polyvinylchlorid, Polystyrol, Polyacrylat, Polymilchsauren (PLA), Polyhydroxysäuren wie z. B Polyhydroxybuttersäure oder Cellulosederivate vorgesehen sein.

Bevorzugt beträgt dabei der Anteil von Klebstoff im Formkörper (in Gew-96 bezogen auf das Gewicht des Formteils) weniger als 10 96, bevorzugt weniger als 5 96, insbesondere weniger als 1 96.

Vorzugsweise ist der Klebstoff als Schmelzklebstoff und/oder als chemisch abbindender Klebstoff ausgebildet. Damit kann mit den elektromagnetischen Wellen entweder die Beschichtung der geschäumten Biogranulatkörner angeschmolzen werden oder die Polymerisation kann mit den elektromagnetischen Wellen initiiert werden, um die Biogranulatkörner untereinander zu verbinden.

Gemäss einer bevorzugten Ausführungsform wird das Verfahren so ausgeführt, dass beim Einsatz der elektromagnetischen Strahlung ein zumindest teilweises Verkleben und/oder Aufschmelzen an der Oberflache des Formteils stattfindet.

Gemäss einer bevorzugten Ausführungsform wird das Verfahren so ausgeführt, dass beim Einsatz der elektromagnetischen Strahlung zumindest an einem Bereich an der Oberflache des Formteils eine Temperatur von >= 70 °C erreicht wird. Dies kann gemäss einer bevorzugten Ausführungsform der Erfindung ausschliesslich durch den Einsatz der elektromagnetischen Strahlung geschehen, gemäss einer alternativen Ausführungsform der Erfindung sind zusätzliche Heizmittel vorgesehen. Diese können z B Heizelemente oder auch der Einsatz von Heissdampf/Heissluft oder ein Gemisch davon sein.

Bevorzugt wird das Verfahren so ausgeführt, dass beim Einsatz der elektromagnetischen Strahlung zumindest an einem Bereich an der Oberfläche des Formteils eine Temperatur zwischen 60 °C bis 160 °C, vorzugsweise 120 °C bis 160 °C erreicht wird. In Varianten, abhängig zum Beispiel von einem Schmelzbereich des Klebstoffes, kann die Temperatur auch kleiner als 100 °C gewählt werden, insbesondere zum Beispiel kleiner 80 °C.

Gemäss einer bevorzugten Ausführungsform besitzt die elektromagnetische Strahlung eine Leistung von 20 W bis 5000 W, noch bevorzugt von 50 W bis 4000 W, noch bevorzugt von 80 W bis 3000W sowie am meisten bevorzugt von 100 W bis 2500 W. In Varianten kann die Leistung auch höher als 5000 W sein, insbesondere 7000 W oder mehr.

Gemäss einer bevorzugten Ausführungsform wird das Formteil elektromagnetischer Strahlung so ausgesetzt, dass die Leistungsdichte (gemessen bezüglich der Oberflache des Formteils) von mehr als 1 W/cm² bis 250 W/cm², noch bevorzugt mehr als 2 W/cm² bis 200 W/cm², noch bevorzugt mehr als 5 W/cm² bis 150 W/cm² , am meisten bevorzugt mehr als 10 W/cm² bis 100 W/cm² betragt. Die Leistungsdichte kann auch mehr als 250 W/cm² betragen.

Gemäss einer bevorzugten Ausführungsform der Erfindung beträgt die Amplitude der elektromagnetischen Strahlung von 1 kV bis 10 kV. In Varianten kann die Amplitude auch grösser 10 kV oder kleiner 1 kV sein.

Gemäss einer bevorzugten Ausführungsform der Erfindung werden während der Herstellung Radiowellen benutzt. Darunter werden insbesondere Wellen im Frequenzbereich von 30 kHz bis 300 MHz verstanden. Gemäss einer weiteren bevorzugten Ausführungsform der Erfindung werden während der Herstellung Mikrowellen benutzt. Darunter werden insbesondere Wellen im Frequenzbereich von 300 MHz bis 300 GHz verstanden.

Gemäss einer bevorzugten Ausführungsform umfasst das Verfahren einen Pressschritt und es werden während der Verpressung der Formteile diese zeitweise gezielt elektromagnetischer Strahlung in einem Frequenzbereich von 30 kHz bis 300 GHz ausgesetzt. Insbesondere ist ein Frequenzbereich zwischen 25 MHz und 30 MHz vorteilhaft.

Die elektromagnetischen Wellen sind weiter vorzugsweise elektromagnetische RF-Strahlung. Die elektromagnetische RF-Strahlung weist vorzugsweise eine Frequenz von zumindest 30 kHz bzw. zumindest 0,1 MHz, insbesondere zumindest 1 MHz bzw. zumindest 2 MHz und vorzugsweise zumindest 10 MHz auf. In Varianten kann die Frequenz auch weniger als 30 kHz betragen. Die Frequenz kann auch weit höher als 10 MHz sein, zum Beispiel 10 GHz bis zu 300 GHz oder mehr.

Besonders bevorzugt sind die elektromagnetischen Wellen derart ausgebildet, dass damit der Klebstoff geschmolzen respektive eine Polymerisation im Klebstoff initiiert werden kann. In Varianten oder zusätzlich werden mit den elektromagnetischen Wellen die Biogranulatkörner erhitzt, über welche der Klebstoff zumindest teilweise indirekt erhitzt und damit geschmolzen wird. Vorzugsweise weisen dazu die Biogranulatkörner einen Wassergehalt von 6 - 9 % auf. Die Biogranulatkörner können dazu vor dem Verbacken befeuchtet, vorzugsweise mit Wasserdampf befeuchtet werden.

Vorzugsweise wird dem Bindemittel oder den Biogranulatkörner eine Substanz zugefügt, welche die Strahlung schneller in Wärme umwandelt, insbesondere zum Beispiel I<ochsalz oder Metallpartikel mit Partikelgrössen zwischen 1 Nanometer bis 100 Mikrometer, vorzugsweise zwischen 5 Nanometer bis 10 Mikrometer, besonders bevorzugt zwischen 5 Nanometer bis 1 Mikrometer. Weiter können dazu auch Farbstoffe, insbesondere Farbstoffe mit Metallionen eingesetzt werden. Insbesondere bei Formkörper mit geringer Dicke, wie zum Beispiel Teller, Becher, Besteck etc. kann damit die Prozesszeit des Verbackens reduziert werden.

Die elektromagnetische RF-Strahlung weist besonders bevorzugt eine Frequenz von maximal 300 MHz auf.

Der Generator zum Erzeugen von elektromagnetischen Wellen erzeugt vorzugsweise elektromagnetische Wellen mit einer Amplitude von zumindest 10³ V und insbesondere zumindest 10⁴ V. Die Amplitude kann aber auch kleiner als 10³ V sein.

Handelsübliche Generatoren erzeugen RF-Strahlung mit einer Frequenz von 27,12 MHz. Die elektromagnetischen Wellen können auch Mikrowellen im Frequenzbereich von 300 MHz bis 300 GHz sein. Weiter können die elektromagnetischen Wellen auch kleinere oder grössere als die obigen Frequenzen aufweisen.

Bei Halbfabrikaten, welche elektromagnetische Strahlung nur in einem geringen Masse absorbieren, ist es zweckmässig, ein dielektrisches Wärmeübertragungsmedium, wie zum Beispiel Wasser, beim Verschweissen hinzuzugeben. Stattdessen können dem Halbfabrikat auch Schaumstoffpartikel zugegeben werden, welche eine bessere Wärmeübertragung aufweisen. Insbesondere bevorzugt sind Materialien, welche ein Dipolmoment aufweisen, wie zum Beispiel Kunststoffe, welche eine Amidgruppe, Urethangruppe, Estergruppe etc. aufweisen. Besonders bevorzugt weist jedoch der Klebstoff selbst ein solches Dipolmoment auf. Dem Fachmann sind viele entsprechende Kunststoffe bekannt. Zur Herstellung des Formkörpers wird vorzugsweise die Technik des Formpressens oder Formteilautomaten eingesetzt.

Vorzugsweise handelt es sich beim Formwerkzeug um ein Crack-Spalt-Formwerkzeug. Damit lassen sich die Biogranulatkörner im Werkzeug komprimieren respektive pressen. In Varianten können auch andere Formwerkzeuge eingesetzt sein, insbesondere wenn dem Halbfabrikat expandierende Stoffe zugesetzt sind.

Vorzugsweise umfasst das Formwerkzeug eine Zuführeinrichtung, über welche der Formraum befüllt wird. Insbesondere bevorzugt handelt es sich bei der Zuführeinrichtung um einen mit Druckluft betriebenen Füllinjektor. In Varianten kann die Befüllung auch durch Unterdruck erfolgen. Dazu kann das Formwerkzeug einen oder mehrere Anschlüsse aufweisen (z.B. eine Lochplatte, Sieb oder dergleichen), um den Formraum zu evakuieren. Damit können die Biogranulatkörner über den Unterdruck in den Formraum gesogen werden. Weiter kann der Füllinjektor auch mit pulsierender Druckluft betrieben werden, womit einerseits Verstopfungen/Brückenbildungen in der Leitung vermieden werden können und anderseits der Formraum vollständig und besonders effizient gefüllt werden kann (keine Verklumpungen). In weiteren Varianten oder zusätzlich kann der Füllinjektor auch auf der Formraumseite mit Unterdruck beaufschlagt werden und an der dem Formraum gegenüberliegenden Seite des Injektors mit Druckluft beaufschlagt werden.

Das Formwerkzeug umfasst vorzugsweise eine erste elektrisch leitende Platte, vorzugsweise eine Metallplatte, welche zum Beispiel Stahl oder Aluminium umfassen kann. Diese Platte ist vorzugsweise mit einer I<oaxialleitung mit einem Hochfrequenzgenerator verbunden, womit RF-Strahlung erzeugt werden kann. Der Hochfrequenzgenerator ist mit einer elektrischen Erde verbunden. Das Formwerkzeug umfasst vorzugsweise eine zweite elektrisch leitende Platte, welche ebenfalls aus Stahl oder Aluminium ausgebildet sein kann und welche ebenfalls mit der elektrischen Erde verbunden ist. Die erste Platte und die zweite Platte sind derart angeordnet (vorzugsweise parallel), dass sie I<ondensatorplatten bilden, zwischen welchen der Formraum liegt und ein Hochfrequenzfeld angelegt werden kann. Die Form des Formwerkzeugs, welche den Formraum definiert, ist vorzugsweise aus einem für RF-Strahlung im Wesentlichen transparenten Material ausgebildet. Dieses Material ist beispielsweise Polytetrafluorethylen (PTFE), Polyethylen, insbesondere UHMWPE oder Polyetherketon (PEEK). Alternativ dazu kann der Formraum direkt durch die beiden Platten begrenzt sein. Der Formraum kann Eintrittsdüsen zum Zuführen von Flüssigkeiten, insbesondere Wasser, Wasserdampf und Gasen, umfassen. Damit kann die Wärmeübertragung gesteuert und damit optimiert werden.

Die erste Platte und die zweite Platte bilden jeweils ein erstes und eine zweites I<ondensatorelement. Die I<ondensatorelemente müssen nicht zwingend plattenförmig ausgebildet sein, sondern können eine dem Formraum entsprechende dreidimensionale Ausbildung aufweisen. Die Firma Kurtz Ersa GmbH verfügt über ein fundiertes Fachwissen über die Berechnung solcher I<ondensatorelemente.

Vorzugsweise liegt eine Rohdichte des Formteils zwischen 40 bis 230 kg/m³. In Varianten kann die Rohdichte auch geringer als 40 kg/m³oder höher als 230 kg/m³sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a: eine schematische Darstellung eines Schnittbildes eines geschäumten Biogranulatkorns mit einer Beschichtung, welche zwei Schichten umfasst;
- Fig. 1b: eine schematische Darstellung eines Schnittbildes eines geschäumten Biogranulatkorns mit einer Beschichtung, welche drei Schichten umfasst;
- Fig. 2: eine schematische Darstellung eines Längsschnitts durch eine Coatiertrommel zum Beschichten von geschäumten Biogranulatkörnern, mit zwei Lanzen;
- Fig. 3: eine schematische Darstellung eines Längsschnitts durch eine Kaskade einer ersten und einer zweiten Coatiertrommel zum Beschichten von geschäumten Biogranulatkörnern, welche jeweils eine Lanze umfassen;
- Fig. 4a: eine schematische Darstellung eines Querschnitts durch ein Isolationselement mit einer Lage und;
- Fig. 4b: eine schematische Darstellung eines Querschnitts durch ein Isolationselement mit zwei Lagen.

Grundsätzlich sind in den Figuren gleiche Teile mit gleichen Bezugszeichen versehen.

### Wege zur Ausführung der Erfindung

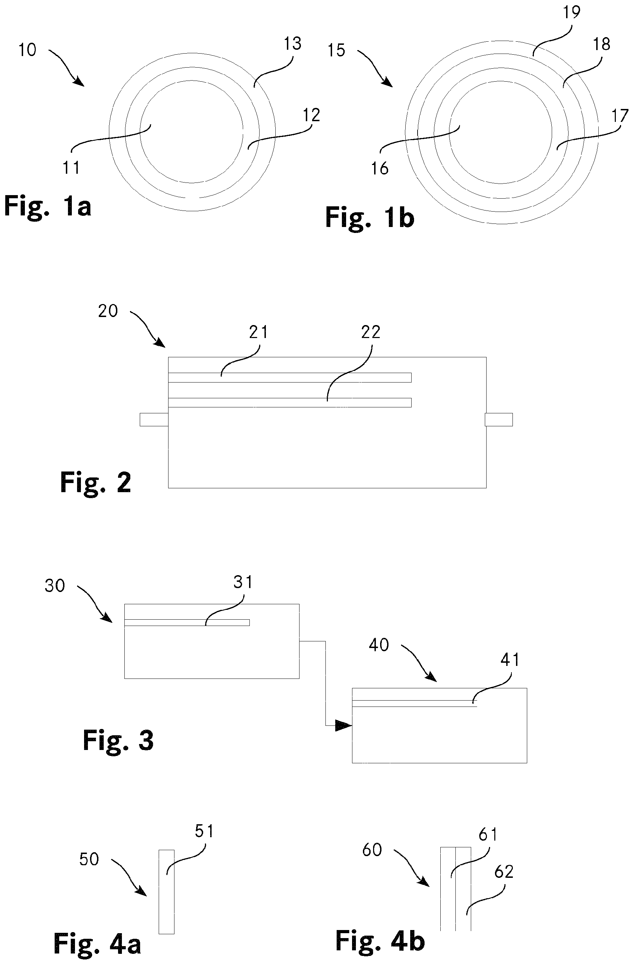

Die Figur 1a zeigt eine schematische Darstellung eines Schnittbildes eines geschäumten Biogranulatkorns 11 mit einer Beschichtung, welche zwei Schichten umfasst, und so ein Halbfabrikat 10 bildet. Im vorliegenden Fall handelt es sich beim geschäumten Biogranulatkorn 11 um gepufften Mais, vorzugsweise um gepufften Industriemais, welcher vorgängig zerkleinert (in kleine Stücke geschnitten, vorzugsweise 0.7 mm bis 4 mm) wird. Anschliessend werden die Körner nach Grösse sortiert (zum Beispiel durch Siebtechniken) und gepufft respektive geschäumt. Anschliessend wird auf dem geschäumten Biogranulatkorn 11 eine erste Schicht aus einem Klebstoff umfassend ein Pestizid aufgebracht. Vorliegend handelt es sich beim Klebstoff um eine Mischung aus PLA und PBAT (zum Beispiel Novamont^{®}) und beim Pestizid um gemahlenes Silikagel. Beides wurde in einem Extruder vermengt und anschliessend als Schmelze auf den gepufften Mais aufgetragen. Weiter kann dazu ein Tankschmelzgerät mit einem Rührwerk vorgesehen sein, in welchem Novamont^{®} und das Silikagel vermengt und anschliessend über eine Pumpe auf den gepufften Mais aufgetragen werden. Für die beiden Beschichtungen kann jeweils ein Tankschmelzgerät vorgesehen sein. Nach einem I<ühlvorgang zum Abkühlen der Schicht 12 erfolgt eine zweite Beschichtung mit demselben Klebstoff zur Versiegelung, um das Silikagel gegen die Aussenluft abzukapseln. Damit wird verhindert, dass bei einer Lagerung das Silikagel Feuchtigkeit aufnehmen und damit sein Wirkung verlieren kann. Anschliessend wird wiederum abgekühlt. Die Abkühlung erfolgt über Stickstoffzufuhr.

Die Figur 1b zeigt eine weitere Variante eines Halbfabrikats 15, im Wesentlichen analog zur Figur 1a. Das vorliegende Halbfabrikat 15 umfasst als geschäumtes Biogranulatkorn 16 gepuffter Mais. Als erste, innere Schicht 17 umfasst das Halbfabrikats 15 Novamont^{®}, als zweite, mittlere Schicht 18 Silikagel und als äussere Schicht 19 respektive als Versiegelungsschicht schliesslich nochmals Novamont^{®}.

Die Figur 2 zeigt eine schematische Darstellung eines Längsschnitts durch eine Coatiertrommel 20, zum Beschichten von geschäumten Biogranulatkörnern, mit zwei Lanzen 21 und 22. Damit können mit einer einzigen Coatiertrommel 20 beide Schichten 12 und 13 auf den gepufften Mais aufgetragen werden, ohne dass eine Lanze mit unterschiedlichen Produkten gespiesen werden muss.

Die Figur 3 zeigt eine schematische Darstellung eines Längsschnitts durch eine Kaskade einer ersten Coatiertrommel 30 und einer zweiten Coatiertrommel 40, zum Beschichten von geschäumten Biogranulatkörnern, welche jeweils eine Lanze 31 respektive 41 umfassen. Der gepuffte Mais wird in der ersten Coatiertrommel 30 mittels der Lanze 31 mit dem Novamont, welches Silikagel enthält, beschichtet. Anschliessend wird das noch heisse Zwischenprodukt über einen Fallstrang in die zweite Coatiertrommel 40 geführt. Durch den Fallstrang kühlt das Zwischenprodukt aus, so dass sich keine 1<lumpen durch Verkleben der Körner bilden. Anschliessend wird mittels der Lanze 41 der zweiten Coatiertrommel 40 eine Novamont-Schicht aufgetragen, welche eine Versiegelungsschicht bildet und eine lange Haltbarkeit des Halbfabrikats 10 ermöglicht.

Die Figur 4a zeigt eine schematische Darstellung eines Querschnitts durch ein Isolationselement 50 mit einer Lage 51, welche aus dem Halbfabrikat 10 hergestellt ist. Dazu wurde das Halbfabrikat 10 in eine Pressform eingetragen. Aufgrund der Wahl des Klebstoffes ist das Halbfabrikat 10 besonders gut rieselfähig, so dass der Transport des Halbfabrikats 10 in die Pressform mit herkömmlichen Mitteln zum Transport von Schüttgütern, zum Beispiel herkömmlichen Injektoren für Granulate, automatisiert erfolgen kann. Anschliessend wird das Halbfabrikat 10 unter Druck mit Radiowellen beaufschlagt, so dass der Klebstoff der einzelnen Körner sich verbindet und einen Formkörper bildet. Das Isolationselement 50 kann zur Gebäudeisolation, als Verpackungsmaterial (Schockabsorber), Möbelbau etc. eingesetzt werden.

Die Figur 4b zeigt eine schematische Darstellung eines Querschnitts durch ein Isolationselement 60 mit zwei Lagen 61 und 62. Die beiden Lagen 61 und 62 unterscheiden sich in der I<orngrössenverteilung. Damit kann ein besonders effektiver Schallschutz erreicht werden. Das Isolationselement 60 kann in gleicher Weise hergestellt werden wie das Isolationselement 50. Die mehreren Schichten können insbesondere in einem einzigen Herstellungsschritt erreicht werden, indem nacheinander Halbfabrikat 10 mit unterschiedlicher Korngrösse in die Form geführt wird und anschliessend das ganze unter Erhitzen verbunden wird. Alternativ können mehrere Isolationsplatten mit unterschiedlichen Korngrössen zu einem einzigen Isolationselement 60 verklebt werden.

Zusammenfassend ist festzustellen, dass erfindungsgemäss ein Halbfabrikat geschaffen wird, welches sich durch gute Haltbarkeit und optimale Rieselfähigkeit auszeichnet. Weiter wird ein besonders effizientes Herstellungsverfahren für das Halbfabrikat bereitgestellt und schliesslich ein besonders formstabiler Formkörper erreicht, welcher sich aufgrund der Pestizidzusätze ebenfalls durch sehr gute Haltbarkeit auszeichnet.

## Patentansprüche

1. Rieselfähiges Halbfabrikat zur Herstellung von Formkörpern, umfassend geschäumte Biogranulatkörner, wobei die Biogranulatkörner eine Beschichtung aufweisen, **dadurch gekennzeichnet, dass** die Beschichtung einen Klebstoff umfasst, womit die Biogranulatkörner in einem Formkörper miteinander verbindbar sind, und wobei die geschäumten Biogranulatkörner einen Feuchtigkeitsanteil von 4-9 gew.% aufweisen.

2. Halbfabrikat nach Anspruch 1, **dadurch gekennzeichnet, dass** der Klebstoff als Schmelzklebstoff und/oder als chemisch abbindender Klebstoff ausgebildet ist und der Klebstoff insbesondere Polylactide und/oder Polybutylenadipat-terephthalat, vorzugsweise eine Mischung aus Polylactiden und Polybutylenadipat-terephthalat, bei welcher ein Anteil der Polylactide 0% oder mehr als 1 gew. %, vorzugsweise mehr als 10 gew. %, insbesondere bevorzugt mehr als 30 gew. % im Klebstoff beträgt.

3. Halbfabrikat nach Anspruch 1 oder 2, **dadurch gekennzeichnet, dass** die Beschichtung ein Pestizid umfasst, wobei das Pestizid Siliziumdioxid, insbesondere Silikagel, I<ieselalgen, Glaspulver, Glassplitter, besonders bevorzugt gemahlenes Silikagel und/oder eine Borverbindung, vorzugsweise Borsäure und/oder ätherische Öle, insbesondere eines oder mehrere aus Lavendelöl, Rosmarinöl, Zitronell, Melisse, Zeder, Pfefferminze, Eukalyptus und Sandelholzextrakt, umfasst.

4. Halbfabrikat nach einem der Ansprüche 1 bis 3, **dadurch gekennzeichnet, dass** das die Beschichtung mindestens eine erste, innere Schicht und eine zweite, äussere Schicht umfasst, wobei das Pestizid in der ersten, inneren Schicht ist.

5. Halbfabrikat nach Anspruch 4, **dadurch gekennzeichnet, dass** die erste, innere Schicht eine Mischung aus Pestizid und Klebstoff umfasst.

6. Verfahren zur Herstellung eines rieselfähigen Halbfabrikats nach einem der Ansprüche 1 bis 5, **dadurch gekennzeichnet, dass** geschäumte Biogranlutatkörner mit einem einen Feuchtigkeitsanteil von 4-9 gew.% mit einem Klebstoff und einem Pestizid beschichtet werden.

7. Verfahren nach Anspruch 6, **dadurch gekennzeichnet, dass** die Beschichtung in mindestens einer ersten Coatiertrommel aufgetragen wird, mit den Schritten:
a. Eintragen der geschäumten Biogranulatkörner in die erste Coatiertrommel;
b. Rotieren der ersten Coatiertrommel;
c. Eintragen des Klebstoffes und des Pestizides.

8. Verfahren nach Anspruch 7, **dadurch gekennzeichnet, dass** innerhalb des Schrittes c. nacheinander die folgenden Schritte ausgeführt werden:
c1. Auftragen des Pestizids auf die geschäumten Biogranulatkörner;
c2. Auftragen des Klebstoffs auf die geschäumten Biogranulatkörner.

9. Formkörper umfassend ein Halbfabrikat nach einem der Ansprüche 1 bis 5.

10. Fassadenelement für die Gebäudeisolation, umfassend einen Formkörper nach Anspruch 9, wobei das Fassadenelement mindestens eine erste Lage und eine zweite Lage umfasst, wobei die geschäumten Biogranulatkörner in der ersten Lage eine geringere Korngrössen aufweisen als die geschäumten Biogranulatkörner der zweiten Lage.

11. Verfahren zur Herstellung eines Formkörpers, wobei eine Klebstoffbeschichtung aufweisende, geschäumte Biogranulatkörner, insbesondere Popcorn mit einer Klebstoffbeschichtung, einem Formraum eines Formwerkzeugs zugeführt werden und wobei die, eine Klebstoffbeschichtung aufweisenden, geschäumten Biogranulatkörner im Formraum unter Hitzeeinwirkung, insbesondere mittels elektromagnetischer Wellen miteinander verbunden werden, **dadurch gekennzeichnet, dass** der Formraum mit einem Druck von zumindest 1.5 bar (0.15 MPa) beaufschlagt ist und wobei die Biogranulatkörner Formraum einen Feuchtigkeitsanteil von 4-9 gew.% aufweisen.

12. Verfahren nach Anspruch 11, **dadurch gekennzeichnet, dass** der Anteil der eine Klebstoffbeschichtung aufweisenden, geschäumten Biogranulatkörner mindestens 20%, vorzugsweise mindestens 50%, insbesondere 100% umfasst.

13. Verfahren nach Anspruch 11 oder 12, **dadurch gekennzeichnet, dass** der Formraum mit einem Druck von zumindest 2 bar, insbesondere zumindest 3 bar und vorzugsweise zumindest 5 bar beaufschlagt ist.

14. Verfahren nach einem der Ansprüche 11 bis 13, **dadurch gekennzeichnet, dass** der Klebstoff ein organisches Polymer, ein organisches Copolymer oder Mischungen davon umfasst, wobei der Klebstoff insbesondere biologisch abbaubar und/oder biobasiert ist.

15. Verfahren nach einem der Ansprüche 11 bis 14, **dadurch gekennzeichnet, dass** den, eine Klebstoffbeschichtung aufweisenden, geschäumten Biogranulatkörner beim Verschweissen mittels elektromagnetischer Wellen ein Wärmeübertragungsmedium, insbesondere eine Flüssigkeit, vorzugsweise Wasser zugesetzt ist.

## Claims

1. Pourable semi-finished product for the production of moulded articles, comprising foamed biogranulate grains, wherein the biogranulate grains have a coating, **characterised in that** the coating comprises an adhesive, with which the biogranulate grains can be bonded to one another in a moulded article, and wherein the foamed biogranulate grains have a moisture content of 4-9% by weight.

2. Semi-finished product according to claim 1, **characterised in that** the adhesive is designed as a hot-melt adhesive and/or as a chemically setting adhesive and the adhesive comprises in particular polylactides and/or polybutylene adipate terephthalate, preferably a mixture of polylactides and polybutylene adipate terephthalate, in which a proportion of the polylactides is 0% or more than 1% by weight, preferably more than 10% by weight, in particular preferably more than 30% by weight in the adhesive.

3. Semi-finished product according to claim 1 or 2, **characterised in that** the coating comprises a pesticide, wherein the pesticide comprises silicon dioxide, in particular silica gel, diatoms, glass powder, glass splinters, particularly preferably ground silica gel and/or a boron compound, preferably boric acid and/or essential oils, in particular one or more of lavender oil, rosemary oil, citronella, lemon balm, cedar, peppermint, eucalyptus and sandalwood extract.

4. Semi-finished product according to any one of claims 1 to 3, **characterised in that** the coating comprises at least a first, inner layer and a second, outer layer, wherein the pesticide is in the first, inner layer.

5. Semi-finished product according to claim 4, **characterised in that** the first, inner layer comprises a mixture of pesticide and adhesive.

6. Process for the production of a free-flowing semi-finished product according to one of claims 1 to 5, **characterised in that** foamed biogranlutate grains with a moisture content of 4-9% by weight are coated with an adhesive and a pesticide.

7. Process according to claim 6, **characterised in that** the coating is applied in at least one first coating drum, comprising the steps of
a. Introducing the foamed biogranules into the first coating drum;
b. Rotating the first coating drum;
c. Introducing the adhesive and the pesticide.

8. Process according to claim 7, **characterised in that** the following steps are carried out successively within step c:
c1. Application of the pesticide to the foamed biogranules;
c2. Application of the adhesive to the foamed biogranules.

9. Moulding comprising a semi-finished product according to any one of claims 1 to 5.

10. Façade element for building insulation, comprising a moulded body according to claim 9, wherein the façade element comprises at least a first layer and a second layer, wherein the foamed biogranulate grains in the first layer have a smaller grain size than the foamed biogranulate grains of the second layer.

11. Process for producing a moulded article, wherein foamed biogranulate grains having an adhesive coating, in particular popcorn with an adhesive coating, are fed to a moulding chamber of a moulding tool and wherein the foamed biogranulate grains having an adhesive coating are bonded to one another in the moulding chamber under the action of heat, in particular by means of electromagnetic waves, **characterised in that** the moulding chamber is filled with a pressure of at least 1. 5 bar (0.15 MPa) and wherein the biogranulate grains in the moulding chamber have a moisture content of 4-9% by weight.

12. Process according to claim 11, **characterised in that** the proportion of foamed biogranulate grains having an adhesive coating comprises at least 20%, preferably at least 50%, in particular 100%.

13. Process according to claim 11 or 12, **characterised in that** the moulding chamber is subjected to a pressure of at least 2 bar, in particular at least 3 bar and preferably at least 5 bar.

14. Process according to one of claims 11 to 13, **characterised in that** the adhesive comprises an organic polymer, an organic copolymer or mixtures thereof, the adhesive being in particular biodegradable and/or biobased.

15. Process according to one of claims 11 to 14, **characterised in that** a heat transfer medium, in particular a liquid, preferably water, is added to the foamed biogranulate grains having an adhesive coating during welding by means of electromagnetic waves.

## Revendications

1. Semi-produit coulant pour la fabrication de corps moulés, comprenant des grains de biogranulés expansés, les grains de biogranulés présentant un revêtement, **caractérisé en ce que** le revêtement comprend une colle, avec laquelle les grains de biogranulés peuvent être reliés les uns aux autres dans un corps moulé, et les grains de biogranulés expansés présentant une teneur en humidité de 4-9 % en poids.

2. Semi-produit selon la revendication 1, **caractérisé en ce que** l'adhésif est réalisé sous forme d'adhésif thermofusible et/ou d'adhésif à prise chimique et l'adhésif contient en particulier des polylactides et/ou du polybutylène adipate-téréphtalate, de préférence un mélange de polylactides et de polybutylène adipate-téréphtalate, dans lequel une proportion de polylactides est de 0% ou plus de 1% en poids, de préférence plus de 10% en poids, en particulier de préférence plus de 30% en poids dans l'adhésif.

3. Semi-produit selon la revendication 1 ou 2, **caractérisé en ce que** le revêtement comprend un pesticide, ledit pesticide comprenant de la silice, en particulier du gel de silice, des diatomées, de la poudre de verre, des éclats de verre, de manière particulièrement préférée du gel de silice broyé et/ou un composé du bore, de préférence de l'acide borique et/ou des huiles essentielles, en particulier une ou plusieurs parmi l'huile de lavande, l'huile de romarin, la citronnelle, la mélisse, le cèdre, la menthe poivrée, l'eucalyptus et l'extrait de bois de santal.

4. Semi-produit selon l'une des revendications 1 à 3, **caractérisé en ce que** le revêtement comprend au moins une première couche interne et une deuxième couche externe, le pesticide étant dans la première couche interne.

5. Semi-produit selon la revendication 4, **caractérisé en ce que** la première couche interne comprend un mélange de pesticide et d'adhésif.

6. Procédé de fabrication d'un semi-produit coulant selon l'une des revendications 1 à 5, **caractérisé en ce que** des grains de biogranlutate expansés ayant un taux d'humidité de 4 à 9 % en poids sont enrobés d'un adhésif et d'un pesticide.

7. Procédé selon la revendication 6, **caractérisé en ce que** le revêtement est appliqué dans au moins un premier tambour d'enrobage, comprenant les étapes suivantes :
a. Introduction des granules de biogranules expansés dans le premier tambour d'enrobage ;
b. Mise en rotation du premier tambour d'enrobage ;
c. Introduction de la colle et du pesticide.

8. Procédé selon la revendication 7, **caractérisé en ce que**, au cours de l'étape c., on effectue successivement les étapes suivantes :
c1. Application du pesticide sur les granules de biogranules expansés ;
c2. Application de l'adhésif sur les granules de biogranules expansés.

9. Corps moulé comprenant un semi-produit selon l'une des revendications 1 à 5.

10. Elément de façade pour l'isolation de bâtiments, comprenant un corps moulé selon la revendication 9, l'élément de façade comprenant au moins une première couche et une deuxième couche, les grains de biogranulés expansés de la première couche présentant une granulométrie inférieure à celle des grains de biogranulés expansés de la deuxième couche.

11. Procédé de fabrication d'un corps moulé, dans lequel des grains de biogranulés expansés présentant un revêtement adhésif, en particulier du pop-corn avec un revêtement adhésif, sont amenés dans un espace de moulage d'un outil de moulage et dans lequel les grains de biogranulés expansés présentant un revêtement adhésif sont liés entre eux dans l'espace de moulage sous l'effet de la chaleur, en particulier au moyen d'ondes électromagnétiques, **caractérisé en ce que** l'espace de moulage est soumis à une pression d'au moins 1. 5 bar (0,15 MPa) et les grains de biogranulés dans l'espace de moulage présentent un taux d'humidité de 4 à 9 % en poids.

12. Procédé selon la revendication 11, **caractérisé en ce que** la proportion de grains de biogranulés expansés présentant un revêtement adhésif comprend au moins 20%, de préférence au moins 50%, en particulier 100%.

13. Procédé selon la revendication 11 ou 12, **caractérisé en ce que** l'espace de moulage est soumis à une pression d'au moins 2 bars, notamment d'au moins 3 bars et de préférence d'au moins 5 bars.

14. Procédé selon l'une des revendications 11 à 13, **caractérisé en ce que** l'adhésif comprend un polymère organique, un copolymère organique ou leurs mélanges, ledit adhésif étant notamment biodégradable et/ou biosourcé.

15. Procédé selon l'une des revendications 11 à 14, **caractérisé en ce que** les grains de biogranulés expansés présentant un revêtement adhésif sont additionnés d'un agent de transfert thermique, notamment d'un liquide, de préférence de l'eau, lors du soudage par ondes électromagnétiques.
